(19)

Europäisches
Patentamt
European
Patent Office
Office européen
des brevets

(11) **EP 2 415 597 A1**

(12) **EUROPEAN PATENT APPLICATION**
published in accordance with Art. 153(4) EPC

(43) Date of publication:
**08.02.2012 Bulletin 2012/06**

(21) Application number: **10758741.2**

(22) Date of filing: **30.03.2010**

(51) Int Cl.:
*B32B 27/20* <sup>(2006.01)</sup>    *H01B 5/14* <sup>(2006.01)</sup>

(86) International application number:
**PCT/JP2010/055746**

(87) International publication number:
**WO 2010/113970 (07.10.2010 Gazette 2010/40)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **31.03.2009 JP 2009087866
31.03.2009 JP 2009087867**

(71) Applicants:
• **Teijin Limited**
**Osaka-shi, Osaka 541-0054 (JP)**
• **Teijin Chemicals, Ltd.**
**Chiyoda-ku**
**Tokyo 100-0013 (JP)**

(72) Inventors:
• **ITOH, Haruhiko**
**Hino-shi**
**Tokyo 191-0065 (JP)**
• **IKEDA, Kouki**
**Tokyo 100-0013 (JP)**

(74) Representative: **Hallybone, Huw George**
**Carpmaels & Ransford**
**One Southampton Row**
**London**
**WC1B 5HA (GB)**

(54) **TRANSPARENT CONDUCTIVE LAMINATE AND TRANSPARENT TOUCH PANEL**

(57) The present invention provides a transparent electroconductive laminate having a combination of high transparency, small haze and sufficient lubricity; and a transparent touch panel comprising such a transparnt electroconductive laminate. The transparent electroconductive laminate of the present invention comprises a transparent organic polymer substrate which has, on at least one surface thereof, a cured resin layer, and a transparent electroconductive layer in this order, and satisfies the following conditions (a) the cured resin layer contains a resin component and first ultrafine particles having an average primary particle diameter of 1 to 100 nm, (b) the resin component and the first ultrafine particles contain the same metal and/or metalloid element, and (c) in the cured resin layer, the content of the first ultrafine particles is from 0.01 to 3 parts by mass per 100 parts by mass of the resin component, and (d) the cured resin layer has a thickness of 0.01 to 2 $\mu$m. The transparent touch panel of the present invention comprises the transparent electroconductive laminate of the present invention.

Fig.1

**Description**

TECHNICAL FIELD

The present invention relates to a transparent electroconductive laminate for an electrode substrate of a transparent touch panel, and also relates to a transparent touch panel having the transparent electroconductive laminate.

BACKGROUND ART

Many kinds of transparent touch panels enabling interactive input have been put into practice as one of manmachine interfaces. Examples of the transparent touch panel include, for example, an optical-type, an ultrasonic-type, a capacitance-type and a resistance film-type touch panels, according to a position-sensing system. Among position-sensing systems for a touch panel, the resistance film-type touch panel has a simple structure and an excellent price/performance ratio, and therefore a most popular.

The resistance film-type touch panel is an electronic component fabricated by holding two transparent substrates, which have transparent electroconductive layers respectively located on the oppositing surfaces thereof, with a constant distance therebetween. By pressing a movable electrode substrate (electrode substrate on the viewing side) with a pen or a finger to sag the movable electrode substrate, contact and electrical conduction between the movable electrode substrate and a fixed electrode substrate (electrode substrate on the opposite side) are achieved, and a sensor circuit is then allowed to detect the position, thereby effecting a predetermined input.

A touch panel is usually used in combination with a display device such as liquid crystal display (LCD) and organic EL display. In recent years, resolution and image quality of such display device have been improved, and very sharp and hazeless display has been developed. Therefore, high transparency and small haze property are naturally demanded for a touch panel substrate to be combined with such a display device.

As the transparent substrate having a transparent electroconductive layer, which constitutes a touch panel, an organic polymer substrate having high transparency is used, and examples thereof include a cellulose-based film such as triacetyl cellulose (TAC) film, a polyester-based film such as polyethylene terephthalate (PET) film, a polycarbonate-based film, and an amorphous polyolefin-based film.

These transparent organic polymer substrate, when as-is used, lacks the lubricity for handling, and therefore a lubricating layer having an uneven surface is generally used to enhance the lubricity. However, in the case of improving the lubricity by an uneven surface, diffused light reflection occurs on the surface, and this decreases the transparency and increases haze. Accordingly, it is very important to provide an organic polymer substrate having excellent lubricity, while maintaining high transparency and small haze.

As a general technique for forming a lubricating layer on a transparent organic polymer substrate, it is known to incorporate, in a resin, fine particles having a submicron particle diameter, for example, inorganic particles such as silica particles, calcium carbonate particles and kaolin particles, and/or an organic particles such as silicone particles and crosslinked polystyrene particles, and thereby form a lubricating layer from such fine particle-containing resin (Patent Documents 1 and 2).

However, in the case of using a lubricating layer formed from a resin containing fine particles having a submicron particle diameter, light is scattered by such fine particles contained in the resin, and thereby the transparency or haze characteristics of the obtained transparent organic polymer substrate are impaired.

In this regard, some degree of transparency and small haze may be realized by decreasing the amount of the fine particles contained in the resin. However, in such a case, it is sometimes difficult to obtain sufficient lubricity.

Also, in the case of using a lubricating layer formed from a resin containing fine particles having a submicron particle diameter, when a writing durability test is performed, particles that form the protrusions on the surface of the transparent electroconductive layer of the electrode substrate sometimes scatter in the touch panel. The thus-scattered fine particles may prevent electrical connection between a movable electrode substrate and a fixed electrode substrate, and thus deteriorate the electrical characteristics of the touch panel. Furthermore, the scattered fine particle may damage the transparent electroconductive layers of the movable electrode substrate and the fixed electrode substrate, and thus deteriorate the electrical characteristics of the touch panel.

In order to solve these problems, for example, Patent Documents 3 and 4 have proposed to form, on a transparent substrate film used as a transparent organic polymer substrate, an anchor layer having an uneven surface, which is formed of a resin containing ultrafine particles having an average primary particle diameter of 1 to 30 nm, and provide a transparent electroconductive layer thereon to obtain a transparent electroconductive film.

By disposing an anchor layer having an uneven surface on a transparent substrate film, sticking due to adherence of films is prevented in the resistance film-system touch panel. However, in order to allow the anchor layer to have an uneven surface by using ultrafine particles having an average particle diameter of 1 to 30 nm, a relatively large amount of ultrafine particles are contained in the anchor layer. Therefore, it is understood that the anchor layer has a relatively large haze value.

RELATED ART

PATENT DOCUMENT

Patent Document 1: JP-A-2001-109388
Patent Document 2: JP-A-H06-99559
Patent Document 3: JP-A-2001-283644
Patent Document 4: JP-A-2002-117724

SUMMARY OF THE INVENTION

PROBLEMS TO BE SOLVED BY THE INVENTION

An object of the present invention is to provide a transparent electroconductive laminate, which has a combination of a high transparency, small haze and sufficient lubricity. Further, an object of the present invention is a transparent touch panel having such a transparent electroconductive laminate, particularly a resistance film-type transparent touch panel having such a transparent electroconductive laminate.

MEANS FOR SOLVING THE PROBLEMS

As a result of intensive investigation, the present inventors have found that, when a cured resin layer comprises a particular combination of a resin component and ultrafine particles, a combination of a high transparency, small haze and sufficient lubricity can be provided, and thereby have conceived the present invention. Further, the present inventors have found that, when a cured resin layer comprises a particular another kind of ultrafine particles, a transparency and/or color tone adjustment property of transparent electroconductive laminate can be improved, and thereby have conceived the present invention.
<1> A transparent electroconductive laminate,
wherein the laminate comprises a transparent organic polymer substrate which has, on at least one surface thereof, a cured resin layer, and a transparent electroconductive layer in this order, and
wherein the laminate satisfies the following conditions (a) to (d):

(a) the cured resin layer contains a resin component and first ultrafine particles having an average primary particle diameter of 1 to 100 nm,
(b) the resin component and the first ultrafine particles contain the same metal and/or metalloid element, and
(c) in the cured resin layer, the content of the first ultrafine particles is from 0.01 to 3 parts by mass per 100 parts by mass of the resin component, and
(d) the cured resin layer has a thickness of 0.01 to 2 $\mu$m.

<2> The transparent electroconductive laminate according to <1> above, wherein the transparent electroconductive layer has from 10 to 300 protrusions having a height of 30 to 200 nm per 50 $\mu$m square.
<3> The transparent electroconductive laminate according to <1> or <2> above, wherein the surface roughness Ra of the transparent electroconductive layer is 20 nm or less.
<4> The transparent electroconductive laminate according to any one of <1> to <3> above, wherein the laminate has a total light transmittance of 85% or more and a haze of 2% or less.
<5> The transparent electroconductive laminate according to any one of <1> to <4> above, wherein the metal and/or metalloid element is/are one or more elements selected from the group consisting of Al, Bi, Ca, Hf, In, Mg, Sb, Si, Sn, Ti, Y, Zn and Zr.
<6> The transparent electroconductive laminate, according to any one of <1> to <5> above, wherein the laminate satisfies the following conditions (d') to (f):

(d') the cured resin layer has a thickness of 0.01 to 0.5 $\mu$m,
(e) the refractive index $n_3$ of the transparent organic polymer substrate, the refractive index $n_2$ of the cured resin layer, and the refractive index $n_1$ of the transparent electroconductive layer satisfies the relationship of $n_1 > n_2$, and $n_3 > n_2$, and

(f) the cured resin layer further contains second ultrafine particles having an average primary particle diameter of 1 to 100 nm and having a refractive index smaller than that of the resin component.

<7> The transparent electroconductive laminate according to <6> above, wherein the cured resin layer contains the second ultrafine particles, and thereby the refractive index of the cured resin layer is decreased by 0.01 or more, in comparison with that of the cured resin layer not containing the second ultrafine particles.

<8> The transparent electroconductive laminate according to <6> or <7> above, wherein the chromaticness index $b*$ value of the $L*a*b*$ color system is from -1.0 to 1.5.

<9> The transparent electroconductive laminate according to any one of <6> to <8> above, wherein, with respect to light coming from the transparent electroconductive layer side, the light path difference between the light reflected on the surface of the transparent electroconductive layer and the light reflected on the surface of the cured resin layer is in a positive range of from 470 nm $\times$ n - 100 nm to 470 nm $\times$ n + 100 nm (n is 0 or a positive integer), and the light path difference between the light reflected on the surface of the transparent electroconductive layer and the light reflected on the surface of the transparent organic polymer substrate is in a positive range of from 470 nm $\times$ (n + 1/2) - 70 nm to 470 nm $\times$ (n + 1/2) + 70 nm. (n is 0 or a positive integer).

<10> The transparent electroconductive laminate according to any one of <6> to <8> above, wherein, with respect to light coming from the transparent electroconductive layer side, the light path difference between the light reflected on the surface of the transparent electroconductive layer and the light reflected on the surface of the cured resin layer is in a positive range of from 550 nm $\times$ n - 120 nm to 550 nm $\times$ n + 120 nm (n is 0 or a positive integer), and the light path difference between the light reflected on the surface of the transparent electroconductive layer and the light reflected on the surface of the transparent organic polymer substrate is in a positive range of from 550 nm $\times$ (n + 1/2) - 80 nm to 550 nm $\times$ (n + 1/2) + 80 nm (n is 0 or a positive integer).

<11> The transparent electroconductive laminate according to any one of <6> to <10> above, wherein the cured resin layer has a refractive index of 1.20 to 1.50.

<12> The transparent electroconductive laminate according to any one of <6> to <11> above, wherein the first and second ultrafine particles are metal oxide ultrafine particles and fluoride oxide ultrafine particles, respectively.

<13> The transparent electroconductive laminate according to any one of <6> to <12> above, wherein the resin component is an organic silicon compound, the first ultrafine particles are silica ($SiO_2$), and the second ultrafine particles are magnesium fluoride ($MgF_2$).

<14> The transparent electroconductive laminate according to any one of <1> to <13> above, wherein the transparent electroconductive laminate comprises a metal compound layer between the transparent electroconductive layer and the cured resin layer, and wherein the metal compound layer, the resin component of the cured resin layer, and the ultrafine particles of the cured resin layer contain the same metal and/or metalloid element.

<15> The transparent electroconductive laminate according to any one of <1> to <14> above, wherein the transparent organic polymer substrate is a laminate having an additional cured resin layer on the surface thereof.

<16> A transparent touch panel, comprising two transparent electrode substrates each having a transparent electroconductive layer on at least one surface thereof, and disposed by arranging respective transparent electroconductive layers to face each other, wherein the transparent electroconductive laminate according to any one of <1> to <15> above is used as at least one of the transparent electrode substrates.

EFFECT OF THE INVENTION

According to the present invention, a transparent electroconductive laminate having a combination of a high transparency, small haze and sufficient lubricity is provided. Particularly, according to the present invention, a transparent electroconductive laminate having an improved transparency and/or color tone adjustment property is provided.

More particularly, since the transparent electroconductive laminate of the present invention has high transparency and small haze, and particularly has an improved transparency and/or color tone adjustment property, it does not tend to lower a definition of image even when it is applied to a high definition display. Further, since the transparent electroconductive laminate of the present invention has a sufficient lubricity, it provides a sufficient handleability, and further prevents sticking and thereby provides a large writing durability when used in a resistant film-type touch panel.

BRIEF DESCRIPTION OF THE DRAWINGS

[Fig. 1] A view for explaining an example of the transparent touch panel having the transparent electroconductive laminate of the present invention.

[Fig. 2] A view showing the result of observation by AFM of the surface morphology of the transparent electroconductive laminates of Example A-1.

[Fig. 3] A view showing the result of observation by AFM of the surface morphology of the transparent electroconductive laminates of Example B-1.

[Fig. 4] A view for explaining one embodiment of the transparent electroconductive laminates of the present invention.

MODE FOR CARRYING OUT THE INVENTION

The embodiments for carrying out the present invention are described below, but the present invention is not limited to the following description.

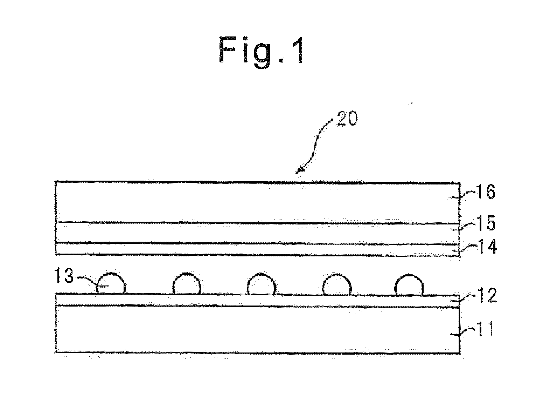

The transparent electroconductive laminate of the present invention comprises a transparent organic polymer substrate which has, on at least one surface thereof, a cured resin layer and a transparent electroconductive layer in this order. One embodiment of the transparent electroconductive laminate of the present invention is a transparent electroconductive laminate (14, 15, 16) in which, as shown in Fig. 1, a cured resin layer (15) and a transparent electroconductive layer (14) are stacked in this order on at least one surface of a transparent organic polymer substrate (16). In one embodiment of the transparent electroconductive laminate of the present invention shown in Fig. 1, the transparent electroconductive laminate (14, 15, 16) of the present invention and another substrate (11) such as glass plate having a transparent electroconductive layer (12) are disposed by arranging respective transparent electroconductive layers (12, 14) to face each other, and spacers (13) are disposed therebetween, whereby a transparent touch panel (20) can be formed.

<Number of Protrusions on Surface>

In the transparent electroconductive laminate of the present invention, fine protrusions are formed on a surface of a cured resin layer, and thereby a combination of high transparency, small haze and sufficient lubricity is provided. Specifically, the transparent electroconductive layer preferably has 10 to 300, more preferably 20 to 200, still more preferably from 30 to 150 protrusions having a height of 30 to 200 nm per 50 $\mu$m square.

Protrusions having a protrusion height of less than 30 nm are not taken into consideration, because of their small effect on lubricity of the laminate. On the other hand, protrusions having a protrusion height of more than 200 nm may impart lubricity to the laminate, but tends to cause light scattering and thereby increase the haze.

If the number of protrusions having height of 30 to 200 nm on the transparent electroconductive layer is too small, the transparent electroconductive laminate may not have sufficient lubricity, whereas if the number of protrusions is too large, significant light scattering may occur on the laminate surface, and, in turn, the haze may be increased.

With respect to the present invention, the number of protrusions on the surface of the transparent electroconductive layer was measured by means of an atomic force microscope (AFM), SPA400, manufactured by SII NanoTechnology Inc. in a dynamic focus mode using a scanner with a measurement range of 150 $\mu$m, an Si cantilever coated with Al on the back surface (SI-DF40, manufactured by SII NanoTechnology Inc.) as a cantilever, and the scanning range of 50x50 $\mu$m. In the measurement, the number of data was 512 in X direction and 512 in Y direction. The obtained profile image data were converted into a three-dimensional profile, the height of each protrusion portion was estimated from the obtained surface data, and the number of protrusions of 30 to 200 nm was counted. Measurement was performed 5 times for each sample, and the average number of protrusions was calculated.

<Arithmetic Average Roughness (Ra)>

The arithmetic average roughness (Ra) of the surface unevenness of the transparent electroconductive layer is preferably 20 nm or less, more preferably 10 nm or less, still more preferably 8 nm or less. Too large arithmetic average roughness (Ra) is not preferred, because, for example, haze is increased, and when applied to a high-definition liquid crystal display, the definition is impaired.

Incidentally, with respect to the present invention, the arithmetic average roughness (centerline average roughness) (Ra) is the roughness defined in accordance with JIS B0601-1994. More specifically, when a portion of a reference length L is extracted from a roughness curve in a centerline direction thereof, the centerline of the extracted portion is taken as axis X, the axial magnification direction is taken as axis Y, and the roughness curve is represented by y=f(x), the arithmetic average roughness (Ra) is represented by the following formula:

[Math. 1]

$$R_a = \frac{1}{1} \int_0^1 |f(x)| dx$$

<Thickness and Refractive Index>

With respect to the thicknesses and refractive indexes of a cured resin layer, the layer was stacked as a single layer under the same coating conditions on an appropriate thermoplastic film substrate having a different refractive index from the layer, and then the thickness and refractive index were calculated by optical simulation using values of the wavelength at which the maximum peak or minimum peak of reflectance appears based on the light interference effect on a light reflection spectrum of the stacked surface, and the peak reflectance thereof. Incidentally, refraction index of a hardcoat layer is measured by a Abbe refractometer, and thickness of a hardcoat layer is measured by an interference method which is similar to that used for a cured resin layer.

<Total Light Transmittance>

In view of visibility, the total light transmittance of the transparent electroconductive laminate of the present invention is 85% or more, preferably 88% or more, still more preferably 90% or more.

With respect to the present invention, the total light transmittance is measured in accordance with JIS K7361-1. Specifically, the total light transmittance $\tau_t$ (%) is a value represented by the following formula:

$$\tau_t = \tau_2 / \tau_1 \times 100$$

(wherein

$\tau_1$: incident light, and
$\tau_2$: total light transmitted through the sample).

<Haze>

From the viewpoint of visibility, the haze of the transparent electroconductive laminate of the present invention is preferably 2% or less, more preferably 1.5% or less, still more preferably 1% or less, yet still more preferably 0.5% or less.

With respect to the present invention, the haze is the haze defined in accordance with JIS K7136. Specifically, the haze is a value defined as the ratio of the diffuse transmittance $\tau_d$ to the total light transmittance $\tau_t$, and, more specifically, can be determined according to the following formula:

$$Haze~(\%)~=~[(\tau_4/\tau_2) - \tau_3(\tau_2/\tau_1)] \times 100$$

wherein

$\tau_1$: luminous flux of incident light,
$\tau_2$: total luminous flux transmitted through the test specimen,
$\tau_3$: luminous flux diffused in the apparatus, and
$\tau_4$: luminous flux diffused in the apparatus and the test specimen.

<Transparent Organic Polymer Substrate>

The transparent organic polymer substrate used in the transparent electroconductive laminates of the present inventions may be any transparent organic polymer substrate, particularly a transparent organic polymer substrate excellent in the heat resistance, transparency and the like, which is employed in the optical field.

The transparent organic polymer substrate used in the transparent electroconductive laminates of the present inventions includes, for example, a substrate composed of a transparent polymer such as a polyester-based polymer, e.g., polyethylene terephthalate and polyethylene naphthalate; a polycarbonate-based polymer; a cellulose-based polymer, e.g., diacetyl cellulose and triacetyl cellulose; and an acrylic polymer, e.g., polymethyl methacrylate. The transparent organic polymer substrate used in the transparent electroconductive laminate of the present invention also includes a substrate composed of a transparent polymer such as a styrene-based polymer, e.g., polystyrene and acrylonitrile·styrene copolymer; an olefin-based polymer, e.g., polyethylene, polypropylene, polyolefin having a cyclic or norbornene structure, and ethylene·propylene copolymer; a vinyl chloride-based polymer; and an amide-based polymer typified by nylon and aromatic polyamide. Other examples of the transparent organic polymer substrate used in the transparent electroconductive laminate of the present invention include a substrate composed of a transparent polymer such as imide-based polymer, sulfone-based polymer, polyethersulfone-based polymer, polyether ether ketone-based polymer, polyphenylene sulfide-based polymer, vinyl alcohol-based polymer, vinylidene chloride-based polymer, vinyl butyral-based polymer, allylate-based polymer, polyoxymethylene-based polymer, epoxy-based polymer and a blend of these polymers.

Regarding the transparent electroconductive laminates of the present inventions, the above transparent organic polymer substrates having optically low birefringence, the controlled phase difference as a product of birefringence and film thickness of approximately 1/4 or 1/2 of the wavelength of visible light (referred to as "λ/4 film" or "λ/2 film"), or not-controlled birefringence may be appropriately selected depending on usage. In performing appropriate selection depending on usage as described above, the transparent electroconductive laminate of the present invention may be used as a display member developing its function through polarization such as linear polarization, elliptical polarization and circular polarization, such as a so-called inner type touch panel having a function as a polarizing plate or a retardation film for use in a liquid crystal display or a function as a polarizing plate, a retardation film or the like for preventing reflection of an organic EL display.

The film thickness of the transparent polymer substrate may be appropriately determined, but generally, in view of strength, workability such as handleability and the like, the film thickness is approximately from 10 to 500 $\mu$m, preferably from 20 to 300 $\mu$m, more preferably from 30 to 200 $\mu$m. Incidentally, a transparent organic polymer substrate can be a laminate having an additional cured resin layer on the surface thereof, and particularly a laminate having a so-called hardcoat layer on the surface thereof.


<Cured Resin Layer>

In the transparent electroconductive laminate of the present invention, (a) the cured resin layer contains a resin component and first ultrafine particles having an average primary particle diameter of 1 to 100 nm, (b) the resin component and the first ultrafine particles contain the same metal and/or metalloid element, and (c) in the cured resin layer, the content of the first ultrafine particles is from 0.01 to 3 parts by mass per 100 parts by mass of the resin component, and (d) the cured resin layer has a thickness of 0.01 to 2 $\mu$m.

Particularly, in one embodiment of the transparent electroconductive laminate of the present invention, (d') the cured resin layer has a thickness of 0.01 to 0.5 $\mu$m, (e) the refractive index $n_3$ of the transparent organic polymer substrate, the refractive index $n_2$ of the cured resin layer, and the refractive index $n_1$ of the transparent electroconductive layer satisfies the relationship of $n_1 > n_2$, and $n_3 > n_2$, and (f) the cured resin layer further contains second ultrafine particles having an average primary particle diameter of 1 to 100 nm and having a refractive index smaller than that of the resin component.

According to the transparent electroconductive laminate of the present invention, fine protrusions are formed on the surface of the transparent electroconductive layer, and thereby a combination of high transparency, small haze and sufficient lubricity is provided. The specific mechanism thereof is not known, but is considered as follows. By virtue of the fact that the resin component and the first ultrafine particles of the cured resin layer contain the same metal and/or metalloid element with each other, some interaction occurs between the resin component and the first ultrafine particles during curing of the resin component to form fine protrusions on the surface of the cured resin layer. These protrusions are reflected to the surface of the transparent electroconductive layer on the cured resin layer, whereby fine protrusions on the surface of the transparent electroconductive layer are formed.

If the transparent electroconductive layer is smooth, films adhere to each other, and thereby have bad handleability or windability. Also, in a resistance film-type touch panel, when sticking due to adhesion of films occurs, writing durability is deteriorated. However, the transparent electroconductive laminate of the present invention has good handleability or windability as well as high writing durability, because fine protrusions are formed on the surface thereof.

Also, in the case of using a lubricating layer formed of a resin containing fine particles having a submicron particle diameter, as described above, the fine particles decrease in writing durability of the touch panel. On the other hand, the transparent electroconductive laminate of the present invention contains first ultrafine particles having a very small particle diameter, and protrusions are formed by an interaction between the first ultrafine particles and the resin component, and therefore the writing durability is not deteriorated.

The "metal and/or metalloid element" contained in both the resin component and the first ultrafine particles is/are not particularly limited, but are preferably one or more elements selected from the group consisting of Al, Bi, Ca, Hf, In, Mg, Sb, Si, Sn, Ti, Y, Zn and Zr, more preferably one or more elements selected from the group consisting of Al, Si and Ti, still more preferably Si and/or Ti.

In one embodiment of the transparent electroconductive laminate of the present invention, the refractive index $n_3$ of the transparent organic polymer substrate, the refractive index $n_2$ of the cured resin layer, and the refractive index $n_1$ of the transparent electroconductive layer satisfies the relationship of $n_1>n_2$, and $n_3>n_2$, and the cured resin layer further contains second ultrafine particles having an average primary particle diameter of 1 to 100 nm and having a refractive index smaller than that of the resin component. When the cured resin layer contains the second ultrafine particles, the refractive index of the cured resin layer can be decreased in comparison with that of the cured resin layer not containing the second ultrafine particles. By decreasing the refractive index $n_2$ of the cured resin layer, the difference between the refractive index $n_1$ of the transparent electroconductive layer and the refractive index $n_2$ of the cured resin layer, and the difference between the refractive index $n_2$ of the cured resin layer and the refractive index $n_3$ of the transparent organic polymer substrate become large, and thereby reflection at the interface between the cured resin layer and the transparent organic polymer substrate, and reflection at the interface between the cured resin layer and the transparent organic polymer substrate are enhanced. The enhanced reflection can be used for cancelling reflection on the surface of the transparent electroconductive layer.

The reflection at the interface between the cured resin layer and the transparent organic polymer substrate can be used for cancelling reflection on the surface of the transparent electroconductive layer. Since the refractive index no of air, the refractive index $n_2$ of the cured resin layer and the refractive index $n_1$ of the transparent electroconductive layer satisfy the relationship of $n_1>n_2>n_0$, the phase is shifted by half wavelength by the reflection on the surface of the transparent electroconductive layer, and the phase is not shifted by the reflection on the surface of the cured resin layer. Accordingly, with respect to light coming from the transparent electroconductive layer side, the light path difference between the light reflected on the surface of the transparent electroconductive layer and the light reflected on the surface of the cured resin layer is preferably about n times (n is 0 or a positive integer) the wavelength of light intended to be cancelled by interference.

In the other words, for example, in the case of obtaining an interference effect for canceling the reflection on the surface of the transparent electroconductive layer for light having a wavelength of 470 nm, the light path difference of the light reflected on the surface of the cured resin layer may be in a positive range of from 470 nm $\times$ n - 70 nm to 470 nm $\times$ n + 70 nm, that is, for example, from 0 to 70 nm, or from 400 to 540 nm; particularly in a positive range of from 470 nm $\times$ n - 50 nm to 470 nm $\times$ n + 50 nm, i.e., for example, from 0 to 50 nm, or from 420 to 520 nm; more particularly in a positive range of from 470 nm $\times$ n - 20 nm to 470 nm $\times$ n + 20 nm, i.e., for example, from 0 to 20 nm, or from 450 to 490 nm.

Also, for example, in the case of obtaining an interference effect for canceling the reflection on the surface of the transparent electroconductive layer for the light having a wavelength of 550 nm, the light path difference of the light reflected on the surface of the cured resin layer may be in a positive range of from 550 nm $\times$ n - 80 nm to 550 nm $\times$ n + 80 nm, particularly in a positive range from 550 nm $\times$ n - 50 nm to 550 nm $\times$ n + 50 nm, more particularly in a positive range from 550 nm $\times$ n - 20 nm to 550 nm $\times$ n + 20 nm.

However, the thickness of the electroconductive layer may be substantially restricted in order to achieve both transparency and electroconductivity. Therefore, in the case of obtaining an interference effect for canceling the reflection on the surface of the transparent electroconductive layer for light having a wavelength of 470 nm, the light path difference of the light reflected on the surface of the cured resin layer may not be the above range, and a positive range of from 470 nm $\times$ n - 100 nm to 470 nm $\times$ n + 100 nm, that is, for example, from 0 to 100 nm, or from 370 to 570 nm is sufficiently acceptable.

Further, in the case of obtaining an interference effect for canceling the reflection on the surface of the transparent electroconductive layer for light having a wavelength of 550 nm, the light path difference of the light reflected on the surface of the cured resin layer may not be the above range, and a positive range of from 550 nm $\times$ n - 120 nm to 550 nm $\times$ n + 120 nm is sufficiently acceptable.

Specifically, when ITO (Indium-Tin Oxide, refractive index: about 2.1) layer is used as a transparent electroconductive layer, the film thickness may be restricted to about 20 nm. In this case, the light path difference of the light reflected on the surface of the cured resin layer is about 84 nm {(20 nm $\times$ 2.1) $\times$ 2}.

The reflection at the interface between the cured resin layer and the transparent organic polymer substrate can be used for cancelling reflection on the surface of the transparent electroconductive layer. Since the refractive index $n_0$ of air, the refractive index $n_3$ of the transparent organic polymer substrate, and the refractive index $n_2$ of the cured resin layer satisfy the relationship of $n_3>n_2>n_0$, the phase is shifted by half wavelength by the reflection on the surface of the transparent electroconductive layer and on the surface of the transparent organic polymer substrate. Accordingly, with respect to light coming from the transparent electroconductive layer side, the light path difference between the light reflected on the surface of the transparent electroconductive layer and the light reflected on the surface of the transparent organic polymer substrate is preferably about n + 1/2 times (n is 0 or a positive integer) the wavelength of light intended to be cancelled by interference.

In the other words, for example, in the case of obtaining an interference effect for canceling the reflection on the surface of the transparent electroconductive layer for the light having a wavelength of 470 nm, the light path length of the light reflected on the surface of the transparent organic polymer substrate may be in a positive range of from 470 nm $\times$ (n + 1/2) - 70 nm to 470 nm $\times$ (n + 1/2) + 70 nm, i.e., for example, from 165 to 345 nm, or from 635 to 775 nm; particularly in a positive range of from 470 nm $\times$ (n + 1/2) - 50 nm to 470 nm $\times$ (n + 1/2) + 50 nm, i.e., for example, from 185 to 285 nm, or from 655 to 755 nm; more particularly in a positive range of from 470 nm $\times$ (n + 1/2) - 20 nm to 470 nm $\times$ (n + 1/2) + 20 nm, i.e., for example, from 215 to 255 nm, or from 685 to 725 nm.

Also, for example, in the case of obtaining an interference effect for canceling the reflection on the surface of the transparent electroconductive layer for the light having a wavelength of 550 nm, the light path difference of the light reflected on the surface of the transparent organic polymer substrate may be in a positive range of from 550 nm $\times$ (n + 1/2) - 80 nm to 550 nm $\times$ (n + 1/2) + 80 nm, particularly in a positive range from 550 nm $\times$ (n + 1/2) - 50 nm to 550 nm $\times$ (n + 1/2) + 50 nm, more particularly in a positive range from 550 nm $\times$ (n + 1/2) - 20 nm to 550 nm $\times$ (n + 1/2) + 20 nm.

According to the above-described interference effect, the color tone and transmittance of the transparent electroconductive laminate can be adjusted. For example, as in the calculation example above, by canceling the light reflection at a wavelength of about 470 nm (blue light) by the interference effect, the chromaticness index b* value of the L*a*b* color system can be adjusted to fall in a range of -1.0 to 1.5, particularly from -0.5 to 1.5, more particularly from 0 to 1.5. Also, by canceling the light reflection at a wavelength of about 550 nm, that is the center wavelength of visible light, the transmittance of the transparent electroconductive laminate can be improved.

The b* value as used in the present invention is the chromaticness index b* value of the L*a*b* color system defined in JIS Z8729, and indicates a value measured by transmission mode in accordance with JIS Z8722. In the measurement of the b* value, standard light D65 specified in the Japanese Industrial Standard Z8720 is employed as the light source, and the measurement is performed under the 2-degree visual field conditions.

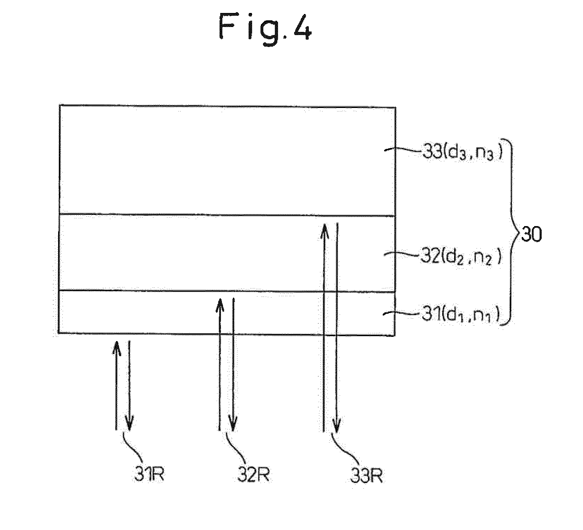

For reference, the reflectance on the surface of each layer of the transparent electroconductive laminate of the present invention, and the light path length in the reflection on such a surface can be calculated as shown below with reference to Fig. 4. In Fig. 4, the transparent electroconductive laminate 30 of the present invention is fabricated by stacking a cured resin layer 32 (thickness: $d_2$, refractive index: $n_2$), and a transparent electroconductive layer 31 (thickness: $d_1$, refractive index: $n_1$) in this order on at least one surface of a transparent organic polymer substrate 33 (thickness: $d_3$, refractive index: $n_3$)

The reflectance $R_1$ of reflection 31R on the surface of the transparent electroconductive layer 31, the reflectance $R_2$ of reflection 32R on the surface of the cured resin layer 32, and the reflectance $R_3$ of reflection 33R on the surface of the optical transparent organic polymer substrate 33 can be generally calculated according to the following formulae ($n_0$: refractive index of air).

$$R_1 = (n_0 - n_1)^2 / (n_0 + n_1)^2 \qquad \text{(Formula 1)}$$

$$R_2 = (n_1 - n_2)^2 / (n_1 + n_2)^2 \qquad \text{(Formula 2)}$$

$$R_3 = (n_2 - n_3)^2 / (n_2 + n_3)^2 \qquad \text{(Formula 3)}$$

The light path difference $D_{32R\text{-}31R}$ between the reflection 31R on the surface of the transparent electroconductive layer 31 and the reflection 32R on the surface of the cured resin layer 32, and the light path difference $D_{33R\text{-}31R}$ between the reflection 31R on the surface of the transparent electroconductive layer 31 and the reflection 33R on the surface of the transparent organic polymer substrate 33 can be calculated according to the following formulae, respectively.

$$D_{32R\text{-}31R} = (d_1 \times n_1) \times 2 \qquad \text{(formula 4)}$$

$$D_{33R\text{-}31R} = (d_1 \times n_1 + d_2 \times n_2) \times 2 \qquad \text{(formula 5)}$$

<Cured Resin Layer - Cured Resin Component>

A curable resin component can be used without any particular limitation as long as it allows for dispersion of the first ultrafine particles, particularly the first and second ultrafine particles, has sufficient strength as a film after formation of the cured resin layer, is transparent, and contains the same metal and/or metalloid element as the first ultrafine particles. Accordingly, as the curable resin component, for example, a polymerizable organic metal compound, particularly a metal-containing acrylate or a metal alkoxide, can be used.

The curable resin component includes, for example, an ionizing radiation-curable resin and a thermosetting resin.

Examples of the monomer giving an ionizing radiation-curable resin include monofunctional and polyfunctional acrylates such as polyol acrylate, polyester acrylate, urethane acrylate giving a hard layer other than those described above, epoxy acrylate, modified styrene acrylate, melamine acrylate, and silicon-containing acrylate.

Examples of the monomer giving an Si-containing ionizing radiation-curable resin include methylacryloxypropyltrimethoxysilane, tris(trimethylsiloxy)silylpropyl methacrylate, allyltrimethylsilane, diallyldiphenylsilane, methylphenylvinylsilane, methyltriallylsilane, phenyltriallylsilane, tetraallylsilane, tetravinylsilane, triallylsilane, triethylvinylsilane, vinyltrimethylsilane, 1,3-dimethyl-1,1,3,3-tetravinyldisiloxane, divinyltetramethyldisiloxane, vinyltris(trimethylsiloxy)silane, vinylmethylbis(trimethylsilyloxy)silane, N-(trimethylsilyl)allylamine, a polydimethylsiloxane having a double bond at both terminals, and a silicone-containing acrylate.

In the case of performing polymerization of the resin layer by ionizing radiation, a photopolymerization initiator is generally added in an appropriate amount, and, if desired, a photosensitizer may be added in an appropriate amount. Examples of the photopolymerization initiator include acetophenone, benzophenone, benzoin, benzoyl benzoate and thioxanthones, and examples of the photosensitizer include triethylamine and tri-n-butylphosphine.

Examples of the thermosetting resin include an organosilane-based thermosetting resin such as alkoxysilane-based compound; an alkoxytitanium-based thermosetting resin; a melamine-based thermosetting resin using, as the monomer, an etherified methylolmelamine; an isocyanate-based thermosetting resin; a phenolic thermosetting resin; and an epoxy thermosetting resin. One of these thermosetting resins may be used alone, or a plurality of them may be used in combination. Also, a thermoplastic resin may be mixed with the thermosetting resin, if desired.

Examples of the organosilane-based thermosetting resin which is preferably used include vinyltrichlorosilane, vinyltrimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminotriethoxysilane, 3-triethoxysilyl-N-(1,3-dzmethylbutylidene)propylamine, N-phenyl-3-aminopropyltrimethoxysilane, N-(vinylbenzyl)-2-aminoethyl-3-aminopropyltrimethoxysilane hydrochloride, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatopropyltriethoxysilane, tetramethoxysilane, tetraethoxysilane, methyltrimethoxysilane, methyltriethoxysilane, dimethyldiethoxysilane, phenyltriethoxysilane, hexamethyldisilazane, hexyltrimethoxysilane, and decyltrimethoxysilane. Among these, methyltrimethoxysilane, methyltriethoxysilane, dimethyldiethoxysilane and the like are preferably used, because these exert excellent performance in view of stabilizing the adherence to substrate.

Examples of the alkoxytitanium-based thermosetting resin which is preferably used include tetraisopropyl titanate, tetranormalbutyl titanate, butyl titanate dimer, tetra(2-ethylhexyl)titanate, tetramethyl titanate, titanium acetylacetonate, titanium tetraacetylacetonate, titanium ethylacetoacetate, titanium octanediolate, titanium lactate, titanium triethanolaminate and polyhydroxytitanium stearate. Among these, tetraisopropyl titanate, tetranormalbutyl titanate, titanium lactate and the like are preferably used, because these exert stable performance in view of the stability as a paint, and the stabilized adherence to substrate.

In the case of performing the crosslinking of the resin layer by heat, a reaction promoter and/or a curing agent may be added in an appropriate amount. Examples of the reaction promoter include triethyldiamine, dibutyltin dilaurate, benzylmethylamine and pyridine. Examples of the curing agent include methylhexahydrophthalic anhydride, 4,4'-diaminodiphenylmethane, 4,4'-diamino-3,3'-diethyldiphenylmethane and diaminodiphenylsulfone.

In the case wherein the monomer forming the cured resin layer contains the same metal and/or metalloid element as the first ultrafine particles, the monomer may be used alone or in combination with another monomer, for example, in combination with a monomer not containing the same metal and/or metalloid element as the ultrafine particles.

Incidentally, the cured resin layer may contain other components such as leveling agent and photosensitizer.

<Cured Resin Layer - First Ultrafine Particles>

The first ultrafine particles having an average primary particle diameter of 1 to 100 nm contained in the cured resin layer is not substantially limited as long as it contains the same metal and/or metalloid element as the resin component, but a metal oxide or a metal fluoride is preferably used. As the metal oxide or metal fluoride, at least one member selected from the group consisting of $Al_2O_3$, $Bi_2O_3$, $CaF_2$, $In_2O_3$, $In_2O_3 \cdot SnO_2$, $HfO_2$, $La_2O_3$, $MgF_2$, $Sb_2O_5$, $Sb_2O_5 \cdot SnO_2$, $SiO_2$, $SnO_2$, $TriO_2$, $Y_2O_3$, ZnO and $ZrO_2$ may be preferably used, and $Al_2O_3$, $SiO_2$ or $TiO_2$ may be more preferably used.

Accordingly, for example, in the case wherein the resin component of the cured resin layer is a resin component obtained from an alkoxysilane, first ultrafine particles of $SiO_2$ may be used. Also, in the case wherein the resin component of the cured resin layer is a resin component obtained from an alkoxytitanium, first ultrafine particles of $TiO_2$ may be used.

The particle diameter of the first ultrafine particles contained in the cured resin layer is from 1 to 100 nm, preferably from 1 to 70 nm, more preferably from 1 to 50 nm, still more preferably from 5 to 40 nm. If the particle diameter of the first ultrafine particles is too large, light scattering, which is not preferred, occurs. If the particle diameter of the first ultrafine particles is too small, the specific surface area of the particles is increased and thereby the particle surface becomes active, as a result, the particles tend to have an extremely strong propensity to aggregate with each other, and this disadvantageously makes the preparation·storage of solution difficult.

The first ultrafine particles contained in the cured resin layer may be surface-modified with a coupling agent or the like as long as the characteristics specified in the present invention are satisfied. As for the production method of the first ultrafine particles, a liquid phase process, a vapor phase process and the like can be used, but the production method is also not particularly limited.

When dispersing the first ultrafine particles in the cured resin, the blending ratio of the first ultrafine particles needs to be from 0.01 to 3 parts by mass, and is preferably from 0.01 to 2.5 parts by mass, more preferably from 0.05 to 2 parts by mass, still more preferably from 0.1 to 1 part by mass, per 100 parts by mass of the resin component after curing. If the ratio of the first ultrafine particles is too small, a resin layer having protrusions on its surface, which is required for usage of the present invention, cannot be easily formed, whereas if the ratio is excessively large, the protrusions of the surface become large and this disadvantageously causes light scattering on the surface and in turn increases the haze.

<Cured Resin Layer - Second Ultrafine Particles>

The second ultrafine particles having an average primary particle diameter of 1 to 100 nm and contained in the cured resin layer are not essentially restricted as long as they have a refractive index smaller than that of the resin component contained in the cured resin layer. Metal oxide particles or metal fluoride particles can be preferably used. With respect to specific material, particle diameter, surface modification, production method and the like of the second ultrafine particles, descriptions of the first ultrafine particles can be referred to.

For example, in one embodiment wherein the cured resin layer contains an organic silicon compound as the resin component and contains silica ($SiO_2$) as the first ultrafine particles, the refractive index of the cured resin layer is about 1.50. In this case, second ultrafine particles having a smaller refractive index, such as magnesium fluoride (refractive index: 1.365), may be selected as the second ultrafine particles.

When dispersing the second ultrafine particles in the cured resin, the blending ratio may be optionally determined in the mixable range. Accordingly, the blending ratio of the second ultrafine particles may be 1 part by mass or more, 10 parts by mass or more, or 50 parts by mass or more, and 500 parts by mass or less, 400 parts by mass of less, 300 parts by mass or less, 200 parts by mass or less, or 150 parts by mass or less, per 100 parts by mass of the resin component after curing.

If the ratio of the second ultrafine particles is too small, the change in refractive index of the cured resin layer becomes small, whereas if the ratio is excessively large, a film may be difficult to form or the haze thereof may be increased.

For example, when dispersing the second ultrafine particles in the cured resin, the blending ratio can be selected such that, by containing the second ultrafine particles in the cured resin layer, the refractive index of the cured resin layer is decreased by 0.01 or more, 0.02 or more, 0.03 or more, 0.04 or more, 0.05 or more, 0.06 or more, 0.07 or more, 0.08 or more, or 0.10 or more, compared with the cured resin layer which does not contain the second ultrafine particles.

By this increase, the refractive index of the cured resin layer can be 1.20 or more, 1.30 or more, 1.40 or more, or 1.20 or more, and 1.50 or less, 1.48 or less, or 1.45 or less.

<Cured Resin Layer - Film Thickness>

By adjusting refraction index and thickness of the cured resin layer, the cured resin layer can be used as an optical interference layer to reduce reflectance or to adjust color tone. The cured resin layer may have a thickness of

0.01 $\mu$m to 2 $\mu$m, particularly 0.01 $\mu$m to 0.5 $\mu$m, preferably 0.01 $\mu$m to 0.3 $\mu$m, and more preferably 0.01 $\mu$m to 0.1 $\mu$m. If the film thickness of the cured resin layer is too small, effective protrusions may not be formed on the layer surface, which is not preferred; whereas if the film thickness of the cured resin layer is too large, curing shrinkage of ultraviolet ray-curable resin bends a polymer substrate to curl it, and reduces reflection reduction and color adjustment effects due to optical interference, which is not preferred.

In the present invention, the protrusions on the surface of the cured resin layer also depend on the thixotropy of the first and second ultrafine particles used. Therefore, for the purpose of developing or controlling the thixotropy, an appropriate solvent or dispersant may be selected and used when forming the cured resin layer. Examples of the solvent which can be used include various types such as alcohol, aromatic, ketone, lactate, cellosolve and glycol. Examples of the dispersant which can be used include various types such as fatty acid amine, sulfonic acid amide, $\varepsilon$-caprolactone, hydrostearic acid, polycarboxylic acid and polyester amine. As for these solvents or dispersants, one kind may be used alone, or two or more kinds may be used in combination.

<Cured Resin Layer - Production Method>

The cured resin layer of the present invention can be preferably formed by a wet process, and all known methods such as doctor knife, bar coater, gravure roll coater, curtain coater, knife coater, spin coater, spray method and immersion method can be used for this purpose.

<Transparent Electroconductive layer>

In the transparent electroconductive laminates of the present inventions, the transparent electroconductive layer is not particularly limited, and includes, for example, a crystalline metal layer or a crystalline metal compound layer. The component constituting the transparent electroconductive layer includes, for example, a metal oxide such as silicon oxide, aluminum oxide, titanium oxide, magnesium oxide, zinc oxide, indium oxide and tin oxide. Above all, a crystalline layer formed of indium oxide as a main component is preferred, and a layer composed of crystalline ITO (Indium Tin Oxide) is more preferably used.

In the case wherein the transparent electroconductive layer is crystalline, the upper limit of the crystal grain size need not be specifically set, but is preferably 3,000 nm or less. If the crystal grain size exceeds 3,000 nm, writing durability is impaired, which is not preferred. The crystal grain size as used herein is defined as a maximum diagonal or diameter out of diagonals or diameters in respective polygonal or oval regions observed through a transmission electron microscope (TEM).

In the case wherein the transparent electroconductive layer is not a crystalline film, sliding durability (or writing durability) or environmental reliability required for a touch panel may be deteriorated.

The transparent electroconductive layer can be formed by a known technique, and, for example, a Physical Vapor Deposition (hereinafter, referred to as "PVD") method such as DC magnetron sputtering method, RF magnetron sputtering method, ion plating method, vacuum deposition method and pulsed laser deposition method may be used. In view of industrial productivity of forming a metal compound layer with a uniform thickness for a large area, a DC magnetron sputtering method is preferred. Incidentally, other than the above-described physical vapor deposition (PVD) method, a chemical formation method such as Chemical Vapor Deposition (hereinafter, referred to as "CVD") method and sol-gel method may be used, but in view of thickness control, a sputtering method is preferred after all.

In view of transparency and electrical conductivity, the film thickness of the transparent electroconductive layer is preferably from 5 to 50 nm, more preferably from 5 to 30 nm. If the film thickness of the transparent electroconductive layer is less than 5 nm, the aging stability of the resistance value tends to be poor, whereas if it exceeds 50 nm, the surface resistance value lowers, which is not preferred as a touch panel.

In the case of using the transparent electroconductive laminate of the present invention for a touch panel, from the standpoint of, for example, reducing the power consumption of the touch panel and extenting a circuit processing, it is preferred to use a transparent electroconductive layer showing a surface resistance value of 100 to 2,000 $\Omega$/sq, more preferably from 140 to 1,000 $\Omega$/sq, when the film thickness of the transparent electroconductive layer is from 10 to 30 nm.

<Metal Compound Layer>

The transparent electroconductive laminates of the present inventions may further have a metal compound layer having a film thickness of 0.5 nm to less than 5.0 nm, between the cured resin layer and the transparent electroconductive layer.

The transparent organic polymer substrate, the cured resin layer, the metal compound layer having a controlled film thickness, and the transparent electroconductive layer are stacked in this order, whereby the adherence between respective layers is greatly improved. Furthermore, when the metal of the ultrafine particles such as metal oxide ultrafine particles and/or metal fluoride ultrafine particles in the cured resin layer is the same as the metal of the metal compound layer, the adherence between the cured resin layer and the transparent electroconductive layer is more improved.

In a transparent touch panel using the transparent electroconductive laminate having such a metal compound layer, compared with that having no metal compound layer, the writing durability required for the transparent touch panel is enhanced. If the film thickness of the metal compound layer is too large, the metal compound layer starts showing mechanical properties as a continuous body and in turn, the edge-pressing durability required for the transparent touch panel cannot be enhanced. On the other hand, if the film thickness of the metal compound layer is too small, control of the film thickness is difficult, and, in addition, adequate adherence between the cured resin layer having fine protrusions on the surface and the transparent electroconductive layer cannot be developed, and thereby the writing durability required for the transparent touch panel is not sufficiently improved.

The component constituting the metal compound layer includes, for example, a metal oxide such as silicon oxide, aluminum oxide, titanium oxide, magnesium oxide, zinc oxide, indium oxide and tin oxide. In particular, the resin component and the first ultrafine particles contained in the cured resin layer preferably contain the same element.

The metal compound layer can be formed by a known technique, and, for example, a physical vapor deposition (PVD) method such as DC magnetron sputtering method, RF magnetron sputtering method, ion plating method, vacuum deposition method and pulsed laser deposition method may be used. In view of industrial productivity of forming a metal compound layer having a uniform thickness for a large area, a DC magnetron sputtering method is preferred. Incidentally, other than the above-described physical vapor deposition (PVD) method, a chemical formation method such as chemical vapor deposition (CVD) method and sol-gel method may be used, but in view of thickness control, a sputtering method is most preferred.

The target used for sputtering is preferably a metal target, and a reactive sputtering method is widely employed. This is because, the oxide of an element used as the metal compound layer is mostly an insulator, and therefore a DC magnetron sputtering method cannot be applied in many cases when the target is a metal compound target. Also, in recent years, a power source capable of causing two cathodes to simultaneously discharge and thereby suppressing formation of an insulator on the target has been developed, and thereby a pseudo RF magnetron sputtering method becomes applicable.

<Additional Cured Resin Layer>

The transparent electroconductive laminate of the present invention may further have a single or a plurality of additional cured resin layers according to usage. The additional cured resin layer can be disposed at any position of the transparent electroconductive laminate of the present invention. In the other words, the additional cured resin layer can be disposed between any layers or on any layer out of the transparent organic polymer substrate, the cured resin layer and the transparent electroconductive layer constituting the transparent electroconductive laminate of the present invention. Accordingly, the additional cured resin layer may be a so-called hardcoat layer constituting the surface of the transparent organic polymer substrate, particularly a clear hardcoat layer not containing fine particles or the like.

The additional cured resin layer can be formed of a thermosetting resin, an active energy ray-curable resin or the like. Above all, an ultraviolet-curable resin in which an ultraviolet ray is used as the active energy ray is preferred because of its excellent productivity and profitability.

Examples of the ultraviolet-curable resin for the additional cured resin layer include diacrylates such as 1,6-hexanediol diacrylate, 1,4-butanediol diacrylate, ethylene glycol diacrylate, diethylene glycol diacrylate, tetraethylene glycol diacrylate, tripropylene glycol diacrylate, neopentyl glycol diacrylate, 1,4-butanediol dimethacrylate, poly(butanediol) diacrylate, tetraethylene glycol dimethacrylate, 1,3-butylene glycol diacrylate, triethylene glycol diacrylate, triisopropylene glycol diacrylate, polyethylene glycol diacrylate and bisphenol A dimethacrylate; triacrylates such as trimethylolpropane triacrylate, trimethylolpropane trimethacrylate, pentaerythritol monohydroxy triacrylate and trimethylolpropane triethoxy triacrylate; tetraacrylates such as pentaerythritol tetraacrylate and ditrimethylolpropane tetraacrylate; and pentaacrylates such as dipentaerythritol (monohydroxy)pentaacrylate. As the ultraviolet-curable resin for the additional cured resin layer, a pentafunctional or higher polyfunctional acrylate can be also used. One of these polyfunctional acrylates may be used alone, or two or more thereof may be mixed and used at the same time. Furthermore, these acrylates may be used after adding thereto one kind or two or more third components such as photoinitiator, photosensitizer, leveling agent, and fine or ultrafine particles composed of a metal oxide, an acrylic component or the like.

<Stacking Order>

In the transparent electroconductive laminate of the present invention, the order of stacking a transparent electroconductive layer, a metal compound layer, a cured resin layer and an additional cured resin layer is not particularly limited as long as a cured resin layer and a transparent electroconductive layer are stacked in this order on at least one surface of a transparent organic polymer substrate, and thereby the function expected to be brought out depending on the usage is fulfilled. For example, in the case of using the transparent electroconductive laminate of the present invention as a touch panel substrate, the layers may be stacked in the following order, assuming that the transparent electroconductive layer is A, the metal compound layer is B, the cured resin layer is C, the transparent organic polymer substrate is D, and the additional cured resin layer is E:
A/C/D, A/C/D/E, A/C/D/C, A/C/E/D/C, A/C/E/D/E, A/C/E/D/E/C, A/B/C/D, A/B/C/D/E, A/B/C/D/C, A/B/C/E/D/C, A/B/C/E/D/E, or A/B/C/E/D/E/C.

<Usage>

The transparent electroconductive laminate of the present invention can be used as a transparent electrode substrate in a transparent touch panel. Particularly, the transparent electroconductive laminate of the present invention can be used as movable and/or fixed electrode substrates in a resistance film-type transparent touch panel, which is fabricated by disposing two transparent electrode substrates each having a transparent electroconductive layer on at least one surface thereof with respective transparent electroconductive layers arranged to face each other. Further, the transparent electroconductive laminate of the present invention can be suitably used in a capacitance-type touch panel.

EXAMPLES

The present invention is described in greater detail below by referring to the examples, but the present invention is not limited to these examples. In the examples, unless otherwise indicated, the "parts" and "%" are on the mass basis. Also, various measurements in the examples were performed as follows.

<Ra (Arithmetic Average Roughness)>

Ra was measured by using a stylus profilometer, DEKTAK 3, manufactured by Sloan. The measurement was performed in accordance with JIS B0601-1994.

<Number of Protrusions on Surface (AFM)>

Measurement was performed by means of an atomic force microscope, SPA400, manufactured by SII NanoTechnology Inc. in a dynamic focus mode using a scanner with a measurement range of 150 $\mu$m, an Si cantilever coated with Al on the back surface (SI-DF40, manufactured by SII NanoTechnology Inc.) as a cantilever, and the scanning range of 50x50 $\mu$m. In the measurement, the number of data was 512 in X direction and 512 in Y direction. The obtained profile image data were converted into a three-dimensional profile, the height of each protrusion portion was estimated from the obtained surface data, and the number of protrusions of 30 to 200 nm was counted. Measurement was performed 5 times for each sample, and the average number of protrusions was calculated.

<Thickness and Refractive Index>

With respect to the thicknesses and refractive indexes of the cured resin, the transparent electroconductive layer, and the hardcoat layer, each layer was stacked as a single layer under the same coating conditions on an appropriate thermoplastic film substrate having a different refractive index from the layer, and then the thickness and refractive index were calculated by optical simulation using values of the wavelength at which the maximum peak or minimum peak of reflectance appears based on the light interference effect on a light reflection spectrum of the stacked surface, and the peak reflectance thereof. Incidentally, with respect to the present invention, unless otherwise indicated, the refractive index is the refractive index for light having a wavelength of 550 nm.

<Haze>

The haze was measured in accordance with JIS K7136 by using a haze meter (MDH2000) manufactured by Nippon Denshoku Industries Co., Ltd.

<Total Light Transmittance>

The total light transmittance was measured in accordance with JIS K7361-1 by using a haze meter (MDH2000) manufactured by Nippon Denshoku Industries Co., Ltd.

<b* Value>

The chromaticness index b* value of the L*a*b* color system defined by JIS Z8729 was measured in a transmission mode in accordance with JIS Z8722. The measurement was performed under the 2-degree visual field conditions by employing, as the light source, standard light $D_{65}$ specified in the Japanese Industrial Standard (JIS) Z8720.

<Lubricity>

The lubricity of the cured resin layer was evaluated by a sensory test based on whether the film was good (A) or bad (B).

<Writing Durability Test>

A writing durability test was performed by linearly moving a polyacetal-made pen with a tip of 0.8 R back and force 500,000 times under a load of 450 g on the movable electrode side of the produced transparent touch panel. The pen was replaced with a new pen every 100,000 times. After moving the pen back and forth 500,000 times on the touch panel, the sample was judged as passed (AA) when the change in linearity between before and after the writing durability test was less than 0.5%, judged as passed (A) when less than 1.0%, judged as passed (B) when less than 1.5%, and judged as failed (C) when 1.5% or more.

<Linearity>

A direct current of 5 V was applied between parallel electrodes on a movable electrode substrate or a fixed electrode substrate. The voltage was measured at 5-mm intervals in the direction perpendicular to the parallel electrodes. Assuming that the voltage at the measurement start position A is EA, the voltage at the measurement end position B is EB, the actual voltage value at the distance X from A is EX, and the theoretical value is ET, the linearity L is represented as follows:

$$ET=(EB-EA)\times X/(B-A)+EA$$

$$L(\%)=(|ET-EX|)/(EB-EA)\times 100$$

[Example A-1]

A polycarbonate film (C110-100, produced by Teijin Chemicals, Ltd.; in the Table, "PC") was used as the transparent organic polymer substrate, and Coating Solution X1 was coated by a wire bar on one surface of the film and heat-treated at 130˚C for 5 minutes to form A cured resin layer having a film thickness of about 50 nm.

(Coating Solution X1)

720 parts by mass of water, 1,080 parts by mass of 2-propanol, and 46 parts by mass of acetic acid were mixed, and then 480 parts by mass of 3-glycidoxypropyltrimethoxysilane ("KBM403", trade name, produced by the Shin-Etsu Chemical Co., Ltd.), 240 parts by mass of methyltrimethoxysilane ("KBM13", trade name, produced by the Shin-Etsu Chemical Co., Ltd.), and 120 parts by mass of N-2-(aminoethyl)-3-aminopropyltrimethoxysilane ("KBM603", trade name, produced by the Shin-Etsu Chemical Co., Ltd.) were sequentially mixed thereto to produce an alkoxysilane mixed solution. This alkoxysilane mixed solution was stirred for 3 hours to perform hydrolysis and partial condensation, and further diluted with a mixed solvent of isopropyl alcohol and 1-methoxy-2-propanol in a mass ratio of 1:1. To the resulting solution, an isopropyl alcohol solution containing 4 parts by mass (0.5 parts by mass of ultrafine particles per 100 parts by mass of resin monomers charged, and 0.7 parts by mass of ultrafine particles per 100 parts by mass of cured resin component after curing) of surface-unmodified silica ultrafine particles having an average primary particle diameter of 20 nm (in the Table, "SiO$_2$-1") was further added, and the mixture was stirred for 10 minutes to prepare Coating Solution X1. Incidentally, with respect to the present invention, the parts by mass of the resin component after curing is based on the assumption that the condensation reaction of monomers proceeded 100%.

On the surface of the cured resin layer formed, an amorphous transparent electroconductive layer (ITO layer) was formed by a sputtering method using an indium oxide-tin oxide target having a composition of indium oxide and tin oxide in a mass ratio of 95:5 and having a filling density of 98%. The ITO layer has a thickness of about 20 nm, and the surface resistance value of about 370 Ω/sq.

Subsequently, a heat treatment at 130˚C for 90 minutes was performed to crystallize the transparent electroconductive layer (ITO layer), and thereby a transparent electroconductive laminate was produced. The transparent electroconductive layer after the ITO layer was crystallized has a thickness of about 20 nm, the refractive index of 2.10, and the surface resistance value of about 450 Ω/sq. The crystal grain size of the transparent electroconductive layer observed by TEM was from 50 to 200 nm.

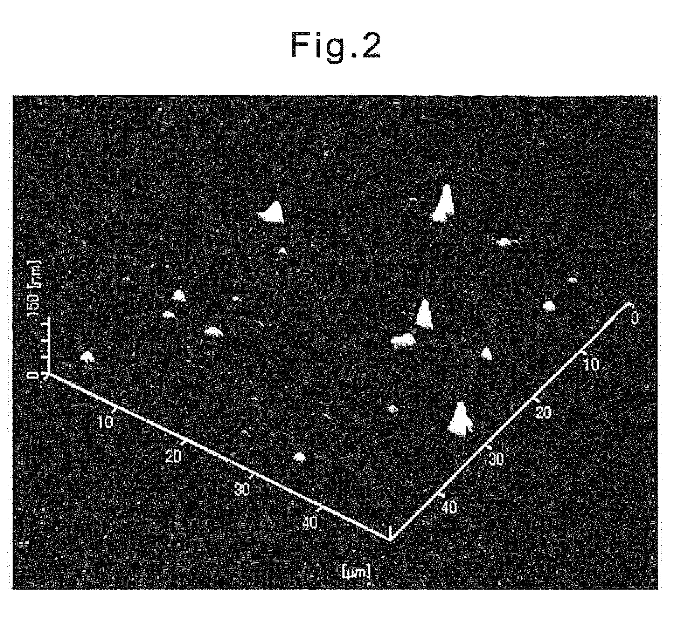

The characteristics of the produced transparent electroconductive laminate are shown in Table 1. Fig. 2 shows the result of observation by AFM of the surface morphology of the transparent electroconductive laminate of this example.

[Examples A-2 to A-4]

Coating Solution X1 was prepared in the same manner as in Example A-1, except that the amount of the silica ultrafine particles added was changed in the preparation of Coating Solution X1. A cured resin layer having a film thickness of about 50 nm was formed in the same manner as in Example A-1.

Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Examples A-5 and A-6]

Cured resin layers were formed by applying Coating Solution X1 on the polycarbonate film by the same method as in Example A-1, except for changing the film thickness to about 30 nm and 1,000 nm, respectively.

Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Example A-7]

Coating Solution X1 was prepared in the same manner as in Example A-1 except that silica ultrafine particles having an average primary particle diameter of 50 nm (in the Table, "$SiO_2$-2") were used in the preparation of Coating Solution X1. A cured resin layer having a film thickness of about 50 nm was formed in the same manner as in Example A-1.

Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Example A-8]

A polycarbonate film (C110-100, produced by Teijin Chemicals, Ltd.) was used as the transparent organic polymer substrate, and Coating Solution Y1 described below was coated by a wire bar on one surface of the film and heat-treated at 130˚C for 5 minutes to form a cured resin layer having a film thickness of about 50 nm.

(Coating Solution Y1)

200 parts by mass of tetrabutoxy titanate ("B-4", trade name, produced by Nippon Soda Co., Ltd.) was diluted with a 1:4 mixed solvent of ligroin (first grade, produced by Wako Pure Chemical Industries, Ltd.) and butanol (guaranteed grade, produced by Wako Pure Chemical Industries, Ltd.). To the resulting solution, an isopropyl alcohol solution containing 0.33 parts by mass (0.17 parts by mass of ultrafine particles per 100 parts by mass of resin monomers charged, and 0.7 parts by mass of ultrafine particles per 100 parts by mass of cured resin component after curing) of surface-unmodified titanium oxide ultrafine particles having an average primary particle diameter of 20 nm (in the Table, "$TiO_2$") was further added, and the mixture was stirred for 10 minutes to prepare Coating Solution Y1.

Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Example A-9]

A polycarbonate film (C110-100, produced by Teijin Chemicals, Ltd.) was used as the transparent organic polymer substrate, and a clear hardcoat layer having a film thickness of 4 $\mu$m was formed on one surface of the film by using an ultraviolet-curable polyfunctional acrylate resin coating material. On the clear hardcoat layer, a cured resin layer having a film thickness of about 50 nm was formed in the same manner as in Example A-1.
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Example A-10]

A polyester film ("Teijin Tetron Film", OFW-188, produced by Teijin DuPont Films Japan Limited) was used as the transparent organic polymer substrate, and a clear hardcoat layer having a film thickness of 4 $\mu$m was formed on one surface of the film by using an ultraviolet-curable polyfunctional acrylate resin coating material. On the clear hardcoat layer, a cured resin layer having a film thickness of about 50 nm was formed in the same manner as in Example A-1.
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 1.

[Example B-1]

A polycarbonate film (C110-100, produced by Teijin Chemicals, Ltd.; in the Table, "PC") was used as the transparent organic polymer substrate, and Coating Solution X2 was coated by a wire bar on one surface of the film and heat-treated at 130˚C for 5 minutes to form a cured resin layer having a film thickness of about 50 nm.

(Coating Solution X2)

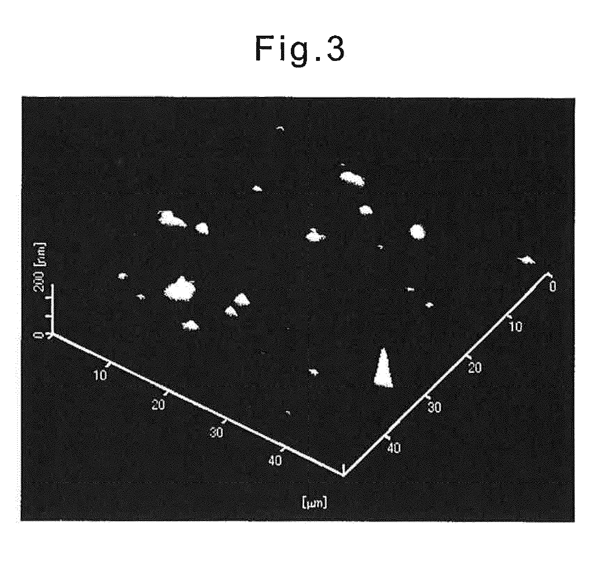

720 parts by mass of water, 1,080 parts by mass of 2-propanol, and 46 parts by mass of acetic acid were mixed, and then 480 parts by mass of 3-glycidoxypropyltrimethoxysilane ("KBM403", trade name, produced by the Shin-Etsu Chemical Co., Ltd.), 240 parts by mass of methyltrimethoxysilane ("KBM13", trade name, produced by the Shin-Etsu Chemical Co., Ltd.), and 120 parts by mass of N-2-(aminoethyl)-3-aminopropyltrimethoxysilane ("KBM603", trade name, produced by the Shin-Etsu Chemical Co., Ltd.), were sequentially mixed thereto to produce an alkoxysilane mixed solution. This alkoxysilane mixed solution was stirred for 3 hours to perform hydrolysis and partial condensation, and further diluted with a mixed solvent of isopropyl alcohol and 1-methoxy-2-propanol in a mass ratio of 1:1. To the resulting solution, 4,200 parts by mass (840 parts by mass in terms of solid content, i.e., 100 parts by mass of ultrafine particles per 100 parts by mass of resin monomers charged, and 145 parts by mass of ultrafine particles per 100 parts by mass of cured resin component after curing) of a 20 mass% isopropyl alcohol liquid dispersion of $MgF_2$ ultrafine particles (in the Table, "$MgF_2$") (produced by C. I. Kasei Co., Ltd.., average primary particle diameter of ultrafine particles: 50 nm) was added, and the mixture was further stirred for 10 minutes. To the resulting solution, an isopropyl alcohol solution containing 4 parts by mass (0.5 parts by mass of ultrafine particles per 100 parts by mass of resin monomers charged, and 0.7 parts by mass of ultrafine particles per 100 parts by mass of cured resin after curing) of surface-unmodified silica ultrafine particles having an average primary particle diameter of 20 nm (in the Table, "$SiO_2$-1") was further added, and the mixture was stirred for 10 minutes to prepare Coating Solution X2. Incidentally, with respect to the present invention, the parts by mass of the resin component after curing is based on the assumption that the condensation reaction of monomers proceeded 100%.
On the surface of the cured resin layer formed, an amorphous transparent electroconductive layer (ITO layer) was formed by a sputtering method using an indium oxide-tin oxide target having a composition of indium oxide and tin oxide in a mass ratio of 95:5 and having a filling density of 98%. The ITO layer has a thickness of about 20 nm, and the surface resistance value of about 370 $\Omega$/sq.
Subsequently, a heat treatment at 130˚C for 90 minutes was performed to crystallize the transparent electroconductive layer (ITO layer), and thereby a transparent electroconductive laminate was produced. The transparent electroconductive layer after the ITO layer was crystallized has a thickness of about 20 nm, the refractive index of 2.10, and the surface resistance value of about 450 $\Omega$/sq. The crystal grain size of the transparent electroconductive layer observed by TEM was from 50 to 200 nm.
The characteristics of the produced transparent electroconductive laminate are shown in Table 2. Fig. 3 shows the result of observation by AFM of the surface morphology of the transparent electroconductive laminate of this example.

[Examples B-2 to B-4]

Coating Solution X2 was prepared in the same manner as in Example B-1, except that the amount of the silica ultrafine particles added was changed in the preparation of Coating Solution X2. A cured resin layer having a film thickness of about 50 nm was formed in the same manner as in Example B-1.
Subsequently, an ITO layer was formed and crystallized in the same manner as in Example B-1. The obtained ITO film had the same surface resistance value and crystal grain size as those of the ITO film of Example B-1. The characteristics of the produced transparent electroconductive laminate are shown in Table 2.

[Examples B-5 and B-6]

Cured resin layers were formed by applying Coating Solution X2 on the polycarbonate film by the same method as in Example B-1, except for changing the film thickness to about 30 nm and 230 nm, respectively.
Subsequently, an ITO layer was formed and crystallized in the same manner as in Example B-1. The obtained ITO film had the same surface resistance value and crystal grain size as those of the ITO film of Example B-1. The characteristics of the produced transparent electroconductive laminate are shown in Table 2.

[Examples B-7 and B-8]

Coating Solution X2 was prepared in the same manner as in Example B-1 except that the amount of the 20 mass% isopropyl alcohol liquid dispersion of $MgF_2$ ultrafine particles added was changed in the preparation of Coating Solution X2. A cured resin layer having a film thickness of about 50 nm was formed in the same manner as in Example B-1.
Subsequently, an ITO layer was formed and crystallized in the same manner as in Example B-1. The obtained ITO film had the same surface resistance value and crystal grain size as those of the ITO film of Example B-1. The characteristics of the produced transparent electroconductive laminate are shown in Table 2.

[Example B-9]

Coating Solution X2 was prepared in the same manner as in Example B-1 except that silica ultrafine particles having an average primary particle diameter of 50 nm (in the Table, "$SiO_2$-2") were used in the preparation of Coating Solution X2. An cured resin layer having a film thickness of about 50 nm was formed in the same manner as in Example B-1.
Subsequently, an ITO layer was formed and crystallized in the same manner as in Reference Example B-1. The obtained ITO film had the same surface resistance value and crystal grain size as those of the ITO film of Reference Example B-1. The characteristics of the produced transparent electroconductive laminate are shown in Table 2.

[Example B-10]

A polycarbonate film (C110-100, produced by Teijin Chemicals, Ltd.) was used as the transparent organic polymer substrate, and a clear hardcoat layer 1 having a film thickness of 4 $\mu$m was formed on one surface of the film by using an ultraviolet-curable polyfunctional acrylate resin coating material. On the clear hardcoat layer, a cured resin layer having a film thickness of about 50 nm was formed in the same manner as in Example B-1 by coating Coating Solution X2 by a wire bar on the clear hardcoat layer, and heat-treating it at 130˚C for 5 minutes.
Subsequently, an ITO layer was formed and crystallized in the same manner as in Example B-1. The obtained ITO film had the same surface resistance value and crystal grain size as those of the ITO film of Example B-1. The characteristics of the produced transparent electroconductive laminate are shown in Table 2.

[Example B-10]

A polyester film ("Teijin Tetron Films", OFW-188, produced by Teijin DuPont Films Japan Limited) was used as the transparent organic polymer substrate, and a clear hardcoat layer 1 having a film thickness of 4 $\mu$m was formed on one surface of the film by using an ultraviolet-curable polyfunctional acrylate resin coating material. On the clear hardcoat layer, a cured resin layer having a film thickness of about 50 nm was formed in the same manner as in Example B-1 by coating Coating Solution X2 by a wire bar on the clear hardcoat layer, and heat-treating it at 130˚C for 5 minutes.
Subsequently, an ITO layer was formed and crystallized in the same manner as in Example B-1. The obtained ITO film had the same surface resistance value and crystal grain size as those of the ITO film of Example B-1. The characteristics of the produced transparent electroconductive laminate are shown in Table 2.

[Comparative Example 1]

A polycarbonate film (C110-100, produced by Teijin Chemicals, Ltd.) was used as the transparent organic polymer substrate, and an ITO layer was formed and crystallized directly on one surface of the film in the same manner as in Example A-1. The obtained ITO film had the same surface resistance value and crystal grain size as those of the ITO film of Example A-1. The characteristics of the produced transparent electroconductive laminate are shown in Table 3.

[Comparative Example 2]

Coating Solution X1 was prepared in the same manner as in Example A-1 except that the ultrafine particles were not added in the preparation of Coating Solution X1. A cured resin layer having a film thickness of about 50 nm was formed in the same manner as in Example A-1.
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 3.

[Comparative Examples 3 to 5]

A polycarbonate film (C110-100, produced by Teijin Chemicals, Ltd.) was used as the transparent organic polymer substrate. A cured resin layer having a film thickness of about 50 nm was formed on one surface of the film by using an isopropyl alcohol solution containing, respectively, 0.7 parts by mass, 20 parts by mass and 40 parts by mass of silica ultrafine particles having an average primary particle diameter of 20 nm per 200 parts by mass of an ultraviolet-curable polyfunctional acrylate resin coating material (resin component: 50%).
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 3.

[Comparative Example 6]

A polycarbonate film (C110-100, produced by Teijin Chemicals, Ltd.) was used as the transparent organic polymer substrate, and Coating Solution Z2 described below was coated by a wire bar on one surface of the film and heat-treated at 130˚C for 5 minutes to form a cured resin layer having a film thickness of about 50 nm.

(Coating Solution Z2)

720 parts by mass of water, 1,080 parts by mass of 2-propanol, and 46 parts by mass of acetic acid were mixed, and then 480 parts by mass of 3-glycidoxypropyltrimethoxysilane ("KBM403", trade name, produced by the Shin-Etsu Chemical Co., Ltd.), 240 parts by mass of methyltrimethoxysilane ("KBM13", trade name, produced by the Shin-Etsu Chemical Co., Ltd.), and 120 parts by mass of N-2-(aminoethyl)-3-aminopropyltrimethoxysilane ("KBM603", trade name, produced by the Shin-Etsu Chemical Co., Ltd.) were sequentially mixed thereto to produce an alkoxysilane mixed solution. This alkoxysilane mixed solution was stirred for 3 hours to perform hydrolysis and partial condensation, and further diluted with a mixed solvent of isopropyl alcohol and 1-methoxy-2-propanol in a mass ratio of 1:1. To the resulting solution, an isopropyl alcohol solution containing 4 parts by mass (0.5 parts by mass of ultrafine particles per 100 parts by mass of resin monomers charged, and 0.7 parts by mass of ultrafine particles per 100 parts by mass of cured resin component after curing) of surface-unmodified titanium oxide ultrafine particles having an average primary particle diameter of 20 nm was further added, and the mixture was stirred for 10 minutes to prepare Coating Solution Z2.
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 3.

[Comparative Examples 7 to 10]

Coating Solution X1 was prepared in the same manner as in Example A-1 except that the amount of the silica ultrafine particles added was changed in the preparation of Coating Solution X1. A cured resin layer having a film thickness of about 50 nm was formed in the same manner as in Example A-1.
Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 3.

[Comparative Example 11]

Coating solution X1 was prepared in the same manner as in Example A-1 except that 4 parts by mass of silica fine particles having an average particle diameter of 0.5 $\mu$m (in the Table, "SiO$_2$-3") was added in the preparation of Coating Solution X1. A cured resin layer having a film thickness of about 50 nm was formed in the same manner as in Examples A-1.

Subsequently, an ITO layer was formed and crystallized in the same manner as in Example A-1. The obtained ITO film had the same surface resistance value and crystal grain size as those of the ITO film of Example A-1. The characteristics of the produced transparent electroconductive laminate are shown in Table 3. The transparent electroconductive laminate of this Example had a surface profile which has protrusions having a height of more than 300 nm were sparsely present.

[Table 1]

Table 1

| | | | | Ex. A-1 | Ex. A-2 | Ex. A-3 | Ex. A-4 | Ex. A-5 | Ex. A-6 | Ex. A-7 | Ex. A-8 | Ex. A-9 | Ex. A-10 |
|---|---|---|---|---|---|---|---|---|---|---|---|---|---|
| Substrate | Kind | Resin | | PC | PC | PC | PC | PC | PC | PC | PC | PC (w/ hardcoat) | PET (w/ hardcoat) |
| | Refractive index | | | 1.584 | 1.584 | 1.584 | 1.584 | 1.584 | 1.584 | 1.584 | 1.584 | 1.512 (hardcoat) | 1.512 (hardcoat) |
| Cured resin layer | Kind | Resin | Kind | Si-based | Si-based | Si-based | Si-based | Si-based | Si-based | Si-based | Ti-based | Si-based | Si-based |
| | | | Refractive index | 1.502 | 1.502 | 1.502 | 1.502 | 1.502 | 1.502 | 1.502 | 2.45 | 1.502 | 1.502 |
| | | | Ratio (parts by mass) | 100 | 100 | 100 | 100 | 100 | 100 | 100 | 100 | 100 | 100 |
| | | Ultrafine particles A | Kind | SiO2-1 | SiO2-1 | SiO2-1 | SiO2-1 | SiO2-1 | SiO2-1 | SiO2-2 | TiO2 | SiO2-1 | SiO2-1 |
| | | | Refractive index | 1.465 | 1.465 | 1.465 | 1.465 | 1.465 | 1.465 | 1.465 | 2.40 | 1.465 | 1.465 |
| | | | Average primary (nm) particle diameter (nm) | 20 | 20 | 20 | 20 | 20 | 20 | 50 | 20 | 20 | 20 |
| | | | Ratio (parts by mass) | 0.7 | 0.07 | 0.02 | 2.5 | 0.7 | 0.7 | 0.7 | 0.7 | 0.7 | 0.7 |
| | | Ultrafine particles B | Kind | - | - | - | - | - | - | - | - | - | - |
| | | | Refractive index | - | - | - | - | - | - | - | - | - | - |
| | | | Average primary particle diameter (nm) | - | - | - | - | - | - | - | - | - | - |
| | | | Ratio (parts by mass) | - | - | - | - | - | - | - | - | - | - |

EP 2 415 597 A1

21

(continued)

|  |  |  | Ex. A-1 | Ex. A-2 | Ex. A-3 | Ex. A-4 | Ex. A-5 | Ex. A-6 | Ex. A-7 | Ex. A-8 | Ex. A-9 | Ex. A-10 |
|---|---|---|---|---|---|---|---|---|---|---|---|---|
|  |  | Refractive index | 1.502 | 1.502 | 1.502 | 1.501 | 1.502 | 1.502 | 1.502 | 2.45 | 1.502 | 1.502 |
|  |  | Thickness (nm) | 50 | 50 | 50 | 50 | 30 | 1000 | 50 | 50 | 50 | 50 |
| Light Path Difference of Path Reflected and Returned on Cured Resin Layer |  |  | 84 | 84 | 84 | 84 | 84 | 84 | 84 | 84 | 84 | 84 |
| Light Path Difference of Path Reflected and Returned on Transparent Organic Polymer Substrate |  |  | 234.2 | 234.2 | 234.2 | 234.1 | 174.12 | 3088 | 234.2 | 329 | 234.2 | 234.2 |
| Evaluation | Surface Configuration | Thickness Ra (nm) | 6.8 | 4.5 | 4.5 | 15 | 6.5 | 8.2 | 5.8 | 18 | 6.4 | 7.3 |
|  |  | Number of protrusions (pieces/50 μm square) | 67 | 26 | 26 | 245 | 63 | 85 | 70 | 25 | 72 | 78 |
|  | Optical Properly | Haze (%) | 0.3 | 0.3 | 0.3 | 0.6 | 0.3 | 0.4 | 0.3 | 1.4 | 0.3 | 0.8 |
|  |  | Total light transmittance (%) | 90.0 | 90.1 | 90.1 | 90.0 | 89.5 | 89.0 | 90.1 | 88.2 | 89.1 | 88.7 |
|  |  | b*value (-) | 1.7 | 1.7 | 1.7 | 1.9 | 1.3 | 2.1 | 1.7 | 2.3 | 2.1 | 2.1 |
|  | Handbility/ Resistivity | Lubricity (A/B) | A | A | A | A | A | A | A | A | A | A |
|  |  | Writing durability test (AA/A/B/C) test | AA | AA | A | A | AA | A | B | AA | AA | AA |

[Table 2]

Table 2

| | | | Ex. B-1 | Ex. B-2 | Ex. B-3 | Ex. B-4 | Ex. B-5 | Ex. B-6 | Ex. B-7 | Ex. B-8 | Ex. B-9 | Ex. B-10 | Ex. B-11 |
|---|---|---|---|---|---|---|---|---|---|---|---|---|---|
| Substrate | Kind | Resin | | PC | PC | PC | PC | PC | PC | PC | PC | PC (w/ hardcoat) | PET (w/ hardcoat) |
| | Refractive index | | 1.584 | 1.584 | 1.584 | 1.584 | 1.584 | 1.584 | 1.584 | 1.584 | 1.584 | 1.512 (hardcoat) | 1.512 (hardcoat) |
| Cured resin layer | Resin | Kind | Si-based | Si-based | Si-based | Si-based | Si-based | Si-based | Si-based | Si-based | Si-based | Si-based | Si-based |
| | | Refractive index | 1.502 | 1.502 | 1.502 | 1.502 | 1.502 | 1.502 | 1.502 | 1.502 | 1.502 | 1.502 | 1.502 |
| | | Ratio (parts by mass) | 100 | 100 | 100 | 100 | 100 | 100 | 100 | 100 | 100 | 100 | 100 |
| | Ultrafine particles A | Kind | SiO2-1 | SiO2-1 | SiO2-1 | SiO2-1 | SiO2-1 | SiO2-1 | SiO2-1 | SiO2-1 | SiO2-2 | SiO2-1 | SiO2-1 |
| | | Refractive index | 1.465 | 1.465 | 1.465 | 1.465 | 1.465 | 1.465 | 1.465 | 1.465 | 1.465 | 1.465 | 1.465 |
| | | Average primary particle diameter (nm) | 20 | 20 | 20 | 20 | 20 | 20 | 20 | 20 | 50 | 20 | 20 |
| | | Ratio (parts by mass) | 0.7 | 0.07 | 0.02 | 2.5 | 0.7 | 0.7 | 0.7 | 0.7 | 0.7 | 0.7 | 0.7 |
| | Ultrafine particles B | Kind | MgF2 | MgF2 | MgF2 | MgF2 | MgF2 | MgF2 | MgF2 | MgF2 | MgF2 | MgF2 | MgF2 |
| | | Refractive index | 1.365 | 1.365 | 1.365 | 1.365 | 1.365 | 1.365 | 1.365 | 1.365 | 1.365 | 1.365 | 1.365 |
| | | Average primary particle diameter (nm) | 20 | 20 | 20 | 20 | 20 | 20 | 20 | 20 | 20 | 20 | 20 |
| | | Ratio (parts by mass) | 145 | 145 | 145 | 145 | 145 | 145 | 50 | 290 | 145 | 145 | 145 |

24

(continued)

| | | Ex. B-1 | Ex. B-2 | Ex. B-3 | Ex. B-4 | Ex. B-5 | Ex. B-6 | Ex. B-7 | Ex. B-8 | Ex. B-9 | Ex. B-10 | Ex. B-11 |
|---|---|---|---|---|---|---|---|---|---|---|---|---|
| | Refractive index | 1.430 | 1.430 | 1.430 | 1.432 | 1.430 | 1.430 | 1.455 | 1.400 | 1.430 | 1.430 | 1.430 |
| | Thickness (nm) | 50 | 50 | 50 | 50 | 30 | 230 | 50 | 50 | 50 | 50 | 50 |
| Light Path Difference of Path Reflected and Returned on Cured Resin Layer | | 84 | 84 | 84 | 84 | 84 | 84 | 84 | 84 | 84 | 84 | 84 |
| Light Path Difference of Path reflected and Returned on Transparent Organic Polymer Substrate | | 227 | 227 | 227 | 227.2 | 169.8 | 741.8 | 229.5 | 224 | 227 | 227 | 227 |
| Surface Configuration | Thickness Ra (nm) | 6.5 | 4.8 | 4.7 | 15 | 6.4 | 6.6 | 7.5 | 6.8 | 6.0 | 6.2 | 7.5 |
| | Number of protrusions (pierces/50 μm square) | 70 | 30 | 32 | 260 | 63 | 58 | 80 | 68 | 63 | 72 | 80 |
| Evaluation — Optical Property | Haze (%) | 0.3 | 0.3 | 0.2 | 0.6 | 0.3 | 0.3 | 0.3 | 0.3 | 0.3 | 0.3 | 0.8 |
| | Total light transmittance (%) | 90.8 | 90.8 | 90.7 | 90.5 | 90.2 | 89.0 | 91.3 | 90.3 | 90.8 | 89.1 | 88.9 |
| | b*value (-) | 0.9 | 1.0 | 0.8 | 1.0 | 0.6 | 0.4 | 0.6 | 1.2 | 0.9 | 1.8 | 1.9 |
| Handbility/Resistivity | Lubricity (A/B) | A | A | A | A | A | A | A | A | A | A | A |
| | Writing durability test (AA/A/B/C) | AA | AA | A | A | AA | AA | A | AA | B | AA | AA |

[Table 3]

Table 3

| | | | | Comp. Ex.1 | Comp. Ex.2 | Comp. Ex.3 | Comp. Ex.4 | Comp. Ex.5 | Comp. Ex.6 | Comp. Ex. 7 | Comp. Ex.8 | Comp. Ex.9 | Comp. Ex. 10 | Comp. Ex. 11 |
|---|---|---|---|---|---|---|---|---|---|---|---|---|---|---|
| Substrate | Kind | Resin | | PC | PC | PC | PC | PC | PC | PC | PC | PC | PC | PC |
| | Refractive index | | | 1.584 | 1.584 | 1.584 | 1.584 | 1.584 | 1.584 | 1.584 | 1.584 | 1.584 | 1.584 | 1.584 |
| Cured resin layer | Kind | Resin | Kind | - | Si-based | Acryl | Acryl | Acryl | Si-based | Si-based | Si-based | Si-based | Si-based | Si-based |
| | | | Refractive index | - | 1.502 | 1.520 | 1.520 | 1.520 | 1.502 | 1.502 | 1.502 | 1.502 | 1.502 | 1.502 |
| | | | Ratio (parts by mass) | - | 100 | 100 | 100 | 100 | 100 | 100 | 100 | 100 | 100 | 100 |
| | | Ultrafine particles A | Kind | - | - | SiO2-1 | SiO2-1 | SiO2-1 | Ti02 | SiO2-1 | SiO2-1 | SiO2-1 | SiO2-1 | SiO2-3 |
| | | | Refractive index | - | - | 1.465 | 1.465 | 1.465 | 2.40 | 1.465 | 1.465 | 1.465 | 1.465 | 1.46 |
| | | | Average primary (nm) particle diameter (nm) | - | - | 20 | 20 | 20 | 30 | 20 | 20 | 20 | 20 | 500 |
| | | | Ratio (parts by mass)- | - | - | 0.7 | 20 | 40 | 0.7 | 0.007 | 10 | 20 | 40 | 0.7 |
| | | Ultrafine particles B | Kind | - | - | - | - | - | - | - | - | - | - | - |
| | | | Refractive index | - | - | - | - | - | - | - | - | - | - | - |
| | | | Average primary particle diameter (nm) | - | - | - | - | - | - | - | - | - | - | - |
| | | | Ratio (parts by mass) | - | - | - | - | - | - | - | - | - | - | - |

| | | | Comp. Ex.1 | Comp. Ex.2 | Comp. Ex.3 | Comp. Ex.4 | Comp. Ex.5 | Comp. Ex.6 | Comp. Ex. 7 | Comp. Ex.8 | Comp. Ex.9 | Comp. Ex. 10 | Comp. Ex. 11 |
|---|---|---|---|---|---|---|---|---|---|---|---|---|---|
| | | Refractive index | - | 1.502 | 1.52 | 1.508 | 1.502 | 1.645 | 1.502 | 1.499 | 1.495 | 1.491 | 1.502 |
| | | Thickness (nm) | - | 50 | 50 | 50 | 50 | 50 | 50 | 50 | 50 | 50 | 50 |
| Light Path Difference of Path Reflected and Returned on Cured Resin Layer | | | 84 | 84 | 84 | 84 | 84 | 84 | 84 | 84 | 84 | 84 | 84 |
| Light Path Difference of Path Reflected and Returned on Transparent Organic Polymer Substrate | | | - | 234.2 | 236 | 234.8 | 234.2 | 248.5 | 234.2 | 233.9 | 233.5 | 233.1 | 234.2 |
| Evaluation | Surface Configuration | Thickness Ra (nm) | 2.8 | 3.2 | 3.1 | 3.8 | 3.6 | 3.4 | 3.5 | 15.6 | 16.8 | 17.8 | 8.8 |
| | | Number of protrusions (pieces/50 $\mu$m square) | 5 | 6 | 5 | 6 | 4 | 6 | 9 | 368 | >500 | >500 | 8 |
| | Optical Property | Haze (%) | 0.1 | 0.1 | 0.1 | 0.2 | 0.2 | 0.1 | 0.1 | 2.8 | 3.8 | 4.6 | 1.1 |
| | | Total light transmittance (%) | 88.0 | 89.7 | 89.3 | 89.1 | 89.1 | 89.3 | 89.3 | 87.9 | 87.7 | 87.4 | 88.7 |
| | | b*value (-) | 2.3 | 1.7 | 2.1 | 2.2 | 2.2 | 2.1 | 1.8 | 2.2 | 2.3 | 2.4 | 1.8 |
| | Handbility/ Resistivity | Lubricity (A/B) | B | B | B | B | B | B | B | A | A | A | A |
| | | Writing durability test (AA/A/B/C) | C (less than 100,000) | C (less than 100,000) | C (less than 100,000) | C (less than 100,000) | C (less than 100,000) | C (less than 100,000) | C (less than 300,000) | A | B | C (less than 300,000) | C (less than 200,000) |

EP 2 415 597 A1

As apparent from Tables 1 and 2, the touch panels using the transparent electroconductive laminates of Examples have a low haze and, at the same time, an excellent writing (sliding) durability. In contrast, as apparent from Table 3, the touch panels using the transparent electroconductive laminates of Comparative Examples 1 to 7, have a poor lubricity and insufficient writing durability, but have a low haze. Also, as apparent from Table 3, the touch panels using the transparent electroconductive laminates of Comparative Examples 8 to 10 have an excellent writing (sliding) durability, but have a high haze and poor optical characteristics. Furthermore, as apparent from Table 3, the touch panel using the transparent electroconductive laminate of Comparative Example 11 has a relatively low haze, but has a poor writing durability.

As apparent from Table 2, the touch panels using the transparent electroconductive laminates of Examples B-1 to B-11 have a superior transparency and/or color adjustment property that the touch panels using the transparent electroconductive laminates of Examples A-1 to A-10.

Incidentally, "Light Path Difference of Path Reflected and Returned on Cured Resin Layer" in the tables mean, with respect to light coming from the transparent electroconductive layer side, the light path difference between the light reflected on the surface of the transparent electroconductive layer and the light reflected on the surface of the cured resin. Further, "Light Path Difference of Path Reflected and Returned on Transparent Organic Polymer Substrate" in the tables mean, with respect to light coming from the transparent electroconductive layer side, the light path difference between the light reflected on the surface of the transparent electroconductive layer the light reflected on the surface of the Transparent organic polymer substrate.

DESCRIPTION OF NUMERICAL REFERENCES

| 11 | Substrate (glass plate) |
| 12, | 14, 31 electroconductive layer |
| 13 | Spacer |
| 15, 32 | Cured resin layer |
| 16, 33 | Transparent organic polymer substrate |
| 20 | Transparent touch panel |

**Claims**

1. A transparent electroconductive laminate,
   wherein the laminate comprises a transparent organic polymer substrate which has, on at least one surface thereof, a cured resin layer, and a transparent electroconductive layer in this order, and
   wherein the laminate satisfies the following conditions (a) to (d):

   (a) the cured resin layer contains a resin component and first ultrafine particles having an average primary particle diameter of 1 to 100 nm,
   (b) the resin component and the first ultrafine particles contain the same metal and/or metalloid element, and
   (c) in the cured resin layer, the content of the first ultrafine particles is from 0.01 to 3 parts by mass per 100 parts by mass of the resin component, and
   (d) the cured resin layer has a thickness of 0.01 to 2 $\mu$m.

2. The transparent electroconductive laminate according to claim 1, wherein the transparent electroconductive layer has from 10 to 300 protrusions having a height of 30 to 200 nm per 50 $\mu$m square.

3. The transparent electroconductive laminate according to claim 1 or 2, wherein the surface roughness Ra of the transparent electroconductive layer is 20 nm or less.

4. The transparent electroconductive laminate according to any one of claims 1 to 3, wherein the laminate has a total light transmittance of 85% or more and a haze of 2% or less.

5. The transparent electroconductive laminate according to any one of claims 1 to 4, wherein the metal and/or metalloid element is/are one or more elements selected from the group consisting of Al, Bi, Ca, Hf, In, Mg, Sb, Si, Sn, Ti, Y, Zn and Zr.

6. The transparent electroconductive laminate, according to any one of claims 1 to 5, wherein the laminate satisfies the following conditions (d') to (f):

   (d') the cured resin layer has a thickness of 0.01 to 0.5 $\mu$m,
   (e) the refractive index $n_3$ of the transparent organic polymer substrate, the refractive index $n_2$ of the cured resin layer, and the refractive index $n_1$ of the transparent electroconductive layer satisfies the relationship of $n_1>n_2$, and $n_3>n_2$, and
   (f) the cured resin layer further contains second ultrafine particles having an average primary particle diameter of 1 to 100 nm and having a refractive index smaller than that of the resin component.

7. The transparent electroconductive laminate according to claim 6, wherein the cured resin layer contains the second ultrafine particles, and thereby the refractive index of the cured resin layer is decreased by 0.01 or more, in comparison with that of the cured resin layer not containing the second ultrafine particles.

8. The transparent electroconductive laminate according to claim 6 or 7, wherein the chromaticness index b* value of the L*a*b* color system is from -1.0 to 1.5.

9. The transparent electroconductive laminate according to any one of claims 6 to 8, wherein, with respect to light coming from the transparent electroconductive layer side, the light path difference between the light reflected on the surface of the transparent electroconductive layer and the light reflected on the surface of the cured resin layer is in a positive range of from 470 nm $\times$ n - 100 nm to 470 nm $\times$ n + 100 nm (n is 0 or a positive integer), and the light path difference between the light reflected on the surface of the transparent electroconductive layer and the light reflected on the surface of the transparent organic polymer substrate is in a positive range of from 470 nm $\times$ (n + 1/2) - 70 nm to 470 nm $\times$ (n + 1/2) + 70 nm (n is 0 or a positive integer).

10. The transparent electroconductive laminate according to any one of claims 6 to 8, wherein, with respect to light coming from the transparent electroconductive layer side, the light path difference between the light reflected on the surface of the transparent electroconductive layer and the light reflected on the surface of the cured resin layer is in a positive range of from 550 nm $\times$ n - 120 nm to 550 nm $\times$ n + 120 nm (n is 0 or a positive integer), and the light path difference between the light reflected on the surface of the transparent electroconductive layer and the light reflected on the surface of the transparent organic polymer substrate is in a positive range of from 550 nm $\times$ (n + 1/2) - 80 nm to 550 nm $\times$ (n + 1/2) + 80 nm (n is 0 or a positive integer).

11. The transparent electroconductive laminate according to any one of claims 6 to 10, wherein the cured resin layer has a refractive index of 1.20 to 1.50.

12. The transparent electroconductive laminate according to any one of claims 6 to 11, wherein the first and second ultrafine particles are metal oxide ultrafine particles and fluoride oxide ultrafine particles, respectively.

13. The transparent electroconductive laminate according to any one of claims 6 to 12, wherein the resin component is an organic silicon compound, the first ultrafine particles are silica ($SiO_2$), and the second ultrafine particles are magnesium fluoride ($MgF_2$).

14. The transparent electroconductive laminate according to any one of claims 1 to 13,
    wherein the transparent electroconductive laminate comprises a metal compound layer between the transparent electroconductive layer and the cured resin layer, and
    wherein the metal compound layer, the resin component of the cured resin layer, and the ultrafine particles of the cured resin layer contain the same metal and/or metalloid element.

15. The transparent electroconductive laminate according to any one of claims 1 to 14,
    wherein the transparent organic polymer substrate is a laminate having an additional cured resin layer on the surface thereof.

16. A transparent touch panel, comprising two transparent electrode substrates each having a transparent electroconductive layer on at least one surface thereof, and disposed by arranging respective transparent electroconductive layers to face each other, wherein the transparent electroconductive laminate according to any one of claims 1 to 15 is used as at least one of the transparent electrode substrates.

# Fig.1

Fig.2

# Fig.3

# Fig.4

$33(d_3, n_3)$

$32(d_2, n_2)$

$31(d_1, n_1)$

$30$

31R  32R  33R

| **INTERNATIONAL SEARCH REPORT** | International application No. |
|---|---|
| | PCT/JP2010/055746 |

**A. CLASSIFICATION OF SUBJECT MATTER**
*B32B27/20*(2006.01)i, *H01B5/14*(2006.01)i

According to International Patent Classification (IPC) or to both national classification and IPC

**B. FIELDS SEARCHED**

Minimum documentation searched (classification system followed by classification symbols)
B32B1/00-43/00, H01B5/14

Documentation searched other than minimum documentation to the extent that such documents are included in the fields searched

| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2008/88059 A1 (Teijin Ltd.), 24 July 2008 (24.07.2008), claims 1, 2, 4, 5, 7, 13, 15, 17, 24; page 9, line 8; page 17, line 8; page 20, line 5; page 21, lines 4 to 6, 18, 22; page 23, line 23; page 33, line 6; each table & US 2009/315849 A1 & EP 2109116 A1 & CN 101578667 A | 1-16 |

☐ Further documents are listed in the continuation of Box C.     ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 April, 2010 (16.04.10) | 27 April, 2010 (27.04.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001109388 A
- JP H0699559 A
- JP 2001283644 A
- JP 2002117724 A